# EUROPÄISCHE PATENTSCHRIFT

(11) **EP 2 686 390 B1**
(45) Veröffentlichungstag und Bekanntmachung des Hinweises auf die Patenterteilung: **13.05.2015**
(21) Anmeldenummer: 12708247.7
(22) Anmeldetag: 08.03.2012
(51) Int. Cl.: C09D 5/02, C08L 71/02

(54) **VERZWEIGTE POLYALKYLENGLYKOLETHER ALS ENTLÜFTENDE NETZ- UND DISPERGIERMITTEL FÜR WÄSSRIGE DISPERSIONSFARBEN**
BRANCHED POLYALKYLENE GLYCOL ETHERS AS DE-AIRING WETTING AND DISPERSING AGENTS FOR AQUEOUS DISPERSION COLORS
POLYALKYLÈNEGLYCOLÉTHERS RAMIFIÉS EN TANT QU'AGENTS MOUILLANTS ET DISPERSANTS DE DÉSAÉRATION POUR DES PEINTURES EN DISPERSION AQUEUSE

(30) Priorität: 16.03.2011 DE 102011014048
(43) Veröffentlichungstag der Anmeldung: 22.01.2014
(73) Patentinhaber: Clariant Finance (BVI) Limited, Road Town, Tortola (VG)
(72) Erfinder: AHRENS, Hendrik, 65830 Kriftel (DE); SCHAEFER,Carsten, 84453 Mühldorf (DE)
(74) Vertreter: Mikulecky, Klaus
(86) Internationale Anmeldenummer: PCT/EP2012/001026
(87) Internationale Veröffentlichungsnummer: WO 2012/123082

(56) Entgegenhaltungen:
- EP-A1- 1 650 246
- WO-A1-02/16471
- WO-A1-2007/124803
- US-A1- 2007 299 228

## Beschreibung

Gegenstand der vorliegenden Erfindung sind wässrige Dispersionsfarben, die verzweigte Polyalkylenglykolether als entlüftende Netz- und Dispergiermittel enthalten, sowie die Verwendung der verzweigten Polyalkylenglykolether als entlüftende Netz- und Dispergiermittel für wässrige Dispersionsfarben.

Wässrige Dispersionsfarben enthalten Polymerdispersionen, auch Bindemittel, Latex oder Polymeremulsionen genannt, anorganische Weißpigmente und Füllstoffe, sowie Hilfsmittel wie Netz- und Dispergiermittel, Rheologieadditive, Entschäumer, Konservierungsmittel, Fungizide, Algizide, Filmbildehilfsmittel, Lösemittel und Puffersubstanzen. Beim Abtönen wässriger Dispersionsfarben werden Pigmentpräparationen volumetrisch oder gravimetrisch zudosiert und in der Dispersionsfarbe homogen verteilt. Das Verteilen kann von Hand durch Rühren erfolgen oder mittels einer elektrischen Rührers oder in einem Farbmischgerät, z. B. einer Schüttelmaschine oder auf einem Rütteltisch, auch Inkshaker oder Paintshaker genannt.

Beim Abtönen mit Pigmentpräparationen, die organische Pigmente oder Rüßpigmente enthalten, kommt es oft zu Streifigkeit und zu einem unruhigen Farbbild aufgrund von Farbtonunterschieden. Die organischen Pigmente flokkulieren in der Farbe und während des Trocknungsprozesses, so dass die Farbstärke reduziert wird. Beim Streichen oder Rollen werden die Pigmentagglomerate wieder aufgetrennt, aber unterschiedlich stark, so dass es zu den beobachteten Farbtonunterschieden kommt. Im Labor wird dieses Phänomen im Rubout-Test simuliert. Der Rubout-Test wird in der Schrift US-3840383 beschrieben.

Zum Vermeiden der Farbtonunterschiede und von Rubout werden den Dispersionsfarben geeignete Netzmittel zugesetzt.

US-2006/207476 beschreibt Latex-kompatible Tenside ausgewählt aus der

Gruppe der Nonylphenoletherphoshorsäureester, Nonylphenolethoxylate, Alkylpolyethylenglykolether, Dinonylsulfosuccinat, difunktionale Propylenoxid/Ethlyenoxid-Blockpolymere (mit sekundären OH-Gruppen), sekundäre Alkoholethoxylate und u. a. hydriertes Rizinusölethoxylat mit 40 Mol Ethylenoxid und Dispergiermittel für universale Farbkasten, die als Abtönpasten sowohl für wässrige Dispersionsfarben als auch für lösemittelhaltige Alkydlacke eingesetzt werden können.

US-2008/110368 beschreibt eine Farbenformulierung aus einem Pigmentpulver und nichtionischen Tensiden ausgewählt aus der Gruppe der Acetylentenside, Alkylphenolethoxylate, Ethylenoxid/Propylenoxid-Blockcopolymere, Alkoholethoxylate und deren Mischungen.

Obwohl nach dem Stand der Technik eine Vielzahl von Verbindungen als geeignetes Netz- und Dispergiermittel vorgeschlagen werden, kommt es in der Praxis immer wieder zu Problemen mit Rubout nach dem Abtönen von Dispersionsfarben mit organischen Pigmentpräparationen.

Alkoxylate werden in der Literatur bereits für eine Vielzahl von Anwendungen und in unterschiedlichen chemischen Zusammensetzungen beschrieben. Die Hauptzahl der beschriebenen Alkoxylate sind lineare Alkoholalkoxylate oder lineare Ethylenoxid/Propylenoxid-Blockcopolymere.

DE-A-10332527 beschreibt die Verwendung von Polyalkylenoxiden zur Vermeidung der Eindickung von mit Schutzkolloiden stabilisierten, wässrigen Polymerdispersionen.

EP-A-0115926 beschreibt die Verwendung von wasserlöslichen Polyoxypropylen/Polyoxyethylen/Polyoxypropylen-Blockcopolymere in wässrigen Metallbearbeitungskühlschmierstoffen.

EP-A-1167452 beschreibt die Verwendung von blockcopolymeren Phosphorsäureestern und deren Salzen als Pigmentnetzmittel für Pigmentpasten, wässrige, lösemittelhaltige, lösemittelarme und lösemittelfreie Lacke und Druckfarben. Die blockcopolymeren Phosphorsäureester werden durch blockweises Umsetzen von Alkylol mit Styroloxid, Ethylenoxid und optional mit weiteren Alkylenoxiden hergestellt und anschließend zum Phosphorsäureester umgesetzt.

EP-A-1771520 beschreibt Alkoholalkoxylate als schaumarme Netzmittel für Beschichtungsstoffe aus Bindemitteln, Pigmenten, Füllstoffen, Additiven und Lösemitteln.

US-3945964 beschreibt Alkoholalkoxylate als Dispergiermittel für wässrige Epoxydharzdispersionen.

US-4091164 beschreibt Ethylenoxid/Propylenoxid-Blockcopolymere als Dispergiermittel für anorganische Pigmente und Füllstoffe in thermoplastischen Kunststoffen.

US-5114607 beschreibt Ethylenoxid/Propylenoxid-Blockcopolymere als schwachschäumende Tenside in flüssigen Metallreinigern.

US-5500219 beschreibt Ethylenoxid/Propylenoxid-Blockcopolymere als Dispergiermittel für in Wasser dispergierbare Pestizidgranulate.

US-6083998 beschreibt Ethylenoxid/Propylenoxid-Blockcopolymere als Entschäumerkomponente für Fermentationsprozesse.

US-A-2003/144397 beschreibt Alkoholalkoxylate als Emulgatoren für wässrige Alkyldharzfarben.

US-A-2004/254295 beschreibt Alkoholalkoxylate als Emulgatoren für Emulsionspolymere.

US-A-2005/288389 beschreibt Ethylenoxid/Propylenoxid-Blockcopolymere als Netzmittel für hydrophoben Schmutz.

WO-02/16471 beschreibt Alkoholalkoxylate als Dispergiermittel für organische Pigment in lösemittelhaltigen Lacken.

Auch verzweigte Alkoxylate und Pfropfpolymere mit Ethylenoxid/Propylenoxid-Seitenketten werden in der Literatur als Netz- und Dispergiermittel beschrieben.

EP-A-1643833 beschreibt Alkanolalkoxylate als Penetrationsförderer sowie ein Ethylendiaminalkoxylat-Derivat als Emulsionsstabilisator oder als Kristallisationsinhibitor in Pflanzenschutzformulierungen.

EP-A-1650246 beschreibt alkoxylierte Epoxyd-Amin-Addukte mit einem zahlenmittleren Molekulargewicht von mehr als 500 g/mol, die herstellbar sind durch die Umsetzung von Mono- und Polyepoxyden, primären oder sekundären Aminen und Alkanolaminen und Alkylenoxiden als Netz- und Dispergiermittel für organische und anorganische Pigmente und Füllstoffe in Pigmentpräparationen. In derselben Schrift werden auch basische Polyalkylenoxide auf Basis von alkoxyliertem Ethylendiamin als Netz- und Dispergiermittel als Stand der Technik beschrieben.

US-4540442 beschreibt Ethylendiamin-Ethylenoxid/Propylenoxid-Blockcopolymer als Reinigungskomponente für wässrige Lackentfernungsbeizen.

US-5629260 beschreibt die Verwendung von verzweigten Ethylenoxid/Propylenoxid-Blockcopolymere als Netzmittel für wässrige Herbizidlösungen.

US-6028046 beschreibt alkoxylierte Polyimine als Vergrauungsinhibitoren für Textilwaschmittel.

US-6300304 beschreibt alkoxylierte Polyimine als "Soil-Release"-Polymere in Waschmitteln.

US-A-2007/299228 beschreibt verzweigte Ethylenoxid/Propylenoxid-Blockcopolymere als Emulgatoren für wässrige Alkydharzdispersionen und wässrige Alkydharzfarben.

WO-2007/124803 lehrt eine wässrige Pigmentpräparation, enthaltend (A) mindestens ein organisches und/oder anorganisches Pigment (B) Dispergiermittel und/oder Tenside, (C) einen drei- oder höherwertigen alkoxylierten Alkohol, (D) einen Polyglykolalkylether, (E) gegenüber hydrotrope Oligomere und/oder Polymere, (F) gegebenenfalls Fette, Öle oder Fettsäuren, (G) gegebenenfalls weitere zur Herstellung wässriger Pigmentdispersionen übliche Zusatzstoffe, und (H) Wasser, wobei als Komponente (C) Verbindungen der Formel (1) bevorzugt sind 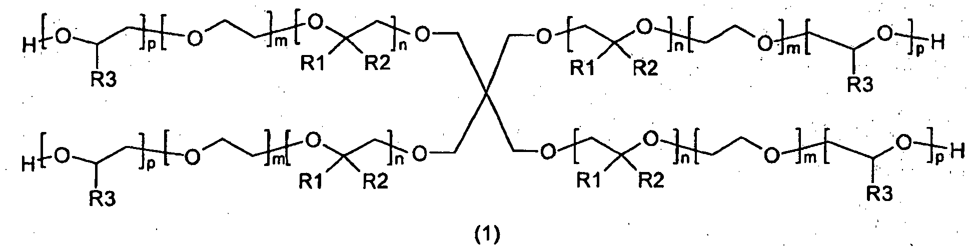 worin
- R¹, R², R³: unabhängig voneinander Wasserstoff, ein verzweigter oder unverzweigter C₁-C₂₀-Alkyl- oder C₃-C₂₀-Cycloalkylrest, ein verzweigter oder unverzweigter C₂-C₂₀-Alkenyl- oder C₃-C₂₀-Cycloalkenylrest, ein Benzylrest oder ein Phenylrest ist, bevorzugt H, CH₃ oder C₂H₅, und
- m: durchschnittlich eine Zahl von 0 bis 100, vorzugsweise von 1 bis 60, besonders bevorzugt 4 bis 25 ist,
- n: durchschnittlich eine Zahl von 0 bis 100, vorzugsweise von 0 bis 60, besonders bevorzugt 0 bis 10 ist,
- p: durchschnittlich eine Zahl von 0 bis 100, vorzugsweise von 0 bis 60, besonders bevorzugt 0 bis 10 ist,
wobei die Summe m+n+p mindestens 1, bevorzugt mindestens 4 und besonders bevorzugt 15 bis 30, beträgt.

WO-2009/130282 beschreibt die Verwendung von Alkoholalkoxylaten und verzweigten Ethylenoxid/Propylenoxid-Blockcopolymeren als Dispergiermittel für wässrige Pestizidsuspensionen.

Nach dem Stand der Technik werden besonders Ethylendiamin-Ethylenoxid/Propylenoxid-Blockcopolymere als Netzmittel für Disperisonsfarben empfohlen. Ein Ethylendiamin-Ethylenoxid/Propylenoxid-Blockcopolymer mit einem Trübungspunkt von 27 - 30 °C, gemessen mit 5 g in 25 cm³ 25 % wässriger Butyldiglykol-Lösung, wird als Netzmitteln und Farbstärkeverbesserer für organische Pigmente und Ruße für wässrige Beschichtungsstöffe empfohlen. Nachteilig der Ethylendiamin-Ethylenoxid/Propylenoxid-Blockcopolymere ist die dunkle Farbe und der ammoniakalische Geruch.

Es wurde nun gefunden, dass die Verbindungen der Formel (I) die Farbstärke von mit organischen Buntpigmenten und Rußpigmenten abgetönten Dispersionsfarben verstärken und Rubout verhindern. Die Verbindungen der Formel (I) verbessern das Benetzungsvermögen der Dispersionsfarbe ohne einen Einfluss auf die rheologischen Eigenschaften der Dispersionsfarbe zu nehmen und sie wirken bei der Herstellung der Farbe entschäumend und entlüften.

Aufgabe der vorliegenden Erfindung war es daher, geeignete Verbindungen zu finden, die den Dispersionsfarben zugesetzt werden, um die beschriebenen Rubout-Probleme zu vermeiden und die keine negativen Nebeneffekte zeigen.

Überraschenderweise wurde gefunden, dass verzweigte Alkoxylate der Formel (I) diese Aufgabe erfüllen.

Gegenstand der Erfindung sind daher Dispersionsfarben, enthaltend Wasser und
(A) mindestens eine Polymerdispersion, welche Homo- oder Copolymere von olefinisch ungesättigten Monomeren umfasst,
(B) mindestens ein anorganisches Weißpigment oder ein anorganischer Füllstoff,
(C) mindestens ein organisches Buntpigment oder Rußpigment,
(D) mindestens eine Verbindung der Formel (I) 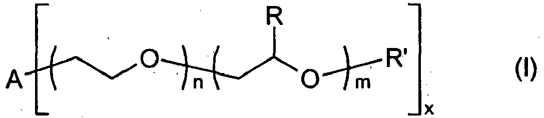
worin
- A: ein aus einem mehrwertigen Alkohol oder Alkanolamin mit mindestens 3 aktiven Wasserstoffatomen abgeleiteter Rest,
- R: ein Methyl oder Ethylrest,
- R': ein Wasserstoffatom oder ein Methyl-, Ethyl-, Propyl- oder Butylrest-,
- n: eine ganze Zahl von 1 bis 250, vorzugsweise von 5 bis 100 und besonders bevorzugt von 10 bis 50,
- m: eine ganze Zahl von 1 bis 500, vorzugsweise von 10 bis 200 und besonders bevorzugt von 20, bis 100,
- x: kleiner oder gleich der Anzahl der aktiven Wasserstoffatome im mehrwertigen Alkohol oder Alkanolamin ist, von dem A abgeleitet ist,
und worin die Polyoxyethylen- und die Polyoxyalkylengruppen blockweise entsprechend der in der Formel I angegebenen Reihenfolge angeordnet sind.

Ein weiterer Gegenstand der Erfindung ist die Verwendung von Verbindungen der Formel (I) als entlüftendes Netz- und Dispergiermittel in den oben genannten Dispersionsfarben.

Ein weiterer Gegenstand der Erfindung ist ein Verfahren zur Entlüftung der oben genannten Dispersionsfarben indem den Dispersionsfarben mindestens eine Verbindung der Formel (I) zugesetzt wird.

Für die Zwecke dieser Erfindung wird der Rubout nach dem in US-3840383 beschriebenen Test bestimmt.

In einer bevorzugten Ausführungsform enthalten die erfindungsgemäßen Dispersionsfarben zusätzlich
(E) übliche, für Dispersionsfarben verwendete Hilfsstoffe ausgewählt aus der Gruppe bestehend aus Netzmitteln, Dispergiermitteln, Entschäumern, Rheologieadditiven, Bioziden, Fungiziden, Algiziden, Filmbildehilfsmittel, Puffersubstanzen wie Natronlauge, Ammoniaklösung, Aminen wie 2-Amino-2-methyl-1-propanol, Säuren wie Schwefelsäure, Salzsäure und Essigsäure.

In einer weiteren bevorzugten Ausführungsform enthalten die erfindungsgemäßen Dispersionsfarben zusätzlich
(F) weitere Zusatzstoffe ausgewählt aus der Gruppe bestehend aus anorganischen Buntpigmenten, Silikonharzen, Kaliwasserglas oder Alkydharzdispersionen.

Als Komponente (A) eignen sich Polymerdispersionen auf Basis ungesättigter Monomere. Bevorzugte olefinisch ungesättigte Monomere sind beispielsweise
- Vinylmonomere, wie Carbonsäureester des Vinylalkohols, beispielsweise Vinylacetat, Vinylpropionat, Vinylether der Isononansäure oder der Isodecansäure,
- arylsubstituierte Olefine, wie Styrol und Stilben
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Hydroxyethylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dipentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali-und Ammoniumsalze, wie Acrylamidomethylpropansulfonsäure und ihre Alkali- und Ammonium-, Alkylammonium und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, N-Methylacrylamid, N-Ethylacrylamid, N-Propylacrylamid, N-Methylolacrylamid sowie die entsprechenden Methacrylsäurederivate und Vinylmethylacetamid.

In einer bevorzugten Ausführungsform werden die oben genannten Monomere zur Herstellung der Polymerdispersion mit weiteren Comonomeren, vorzugsweise Olefinen oder hälogenierten Olefinen mit 2 bis 8 Kohlenstoffatomen wie z. B. Ethylen, Propen, Buten, Pentan, 1,3-Butadien, Chloropren, Vinylchlorid, Vinylidenchlorid, Vinylidenfluorid und Tetrafluorethylen polymerisiert.

Als Komponente (B) eignen sich anorganische Weißpigmente und Füllstoffe wie beispielsweise Titandioxide, Calciumcarbonate, Talkum, Kaolin, Bariumsulfate, Zinksulfide, Zinkoxide. Bevorzugt werden auch Mischungen der genannten anorganischen Weißpigmente verwendet. Eine besonders bevorzugte Mischung anorganischer Weißpigmente enthält Titandioxid, Calciumcarbonat, Talkum und Kaolin.

Als Komponente (C) kommen Monoazo-, Disazo-, verlackte Azo-, β-Naphthol-, Naphthol AS-, Benzimidazolon-, Disazokondensations-, Azo-MetallkomplexPigmente und polycyclische Pigmente wie z. B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Als beispielhafte Auswahl besonders bevorzugter organischer Buntpigmente sind dabei Rußpigmente, wie z. B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Näphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81 zu nennen.

Bei Komponente (D) handelt es sich um ein verzweigtes Alkoxylierungsprodukt mehrwertiger Alkohole oder Alkanolamine. In Formel (I) stellt A einen Rest dar, der aus einem mehrwertigen Alkohol oder einem Alkanolamin abgeleitet ist. Unter dem Begriff "abgeleitet" ist die formale Abstraktion der zur Alkoxylierung fähigen Wasserstoffatome zu verstehen. Bevorzugte mehrwertige Alkohole, von denen A sich ableitet, sind Glycerin, Butantriol, Hexantriol, Trimethylolpropan, Pentaerythtritol, Xylithol, Zuckeralkohole (Alditole) wie beispielsweise Mannitol, Isomalt, Lactitol, Sorbitol, Glucitol, Xylitol, Theirtol und Erythritol. Im Allgemeinen haben mehrwertige Alkohole so viele zur Alkoxylierung fähige Wasserstoffatome wie sie OH-Gruppen umfassen.

In einer weiteren bevorzugten Ausführungsform der Erfindung ist A aus Alkanolaminen wie Ethanolamin, Diethanolamin und Triethanolamin abgeleitet. Im Allgemeinen haben Alkanolamine so viele zur Alkoxylierung fähigen Wasserstoffatome wie sie OH-Gruppen und NH-Gruppen und zweimal so viele zur Alkoxylierung fähigen Wasserstoffatome wie sie NH₂-Gruppen umfassen. Die zur Alkoxylierung befähigten Wasserstoffatome werden hier auch als aktive Wasserstoffatome bezeichnet.

A umfasst vorzugsweise bis zu 8 aktive Wasserstoffatome, insbesondere 4 bis 6 aktive Wasserstoffatome. x ist vorzugsweise gleich der Zahl der aktiven Wasserstoffatome in A. In einer weiteren bevorzugten Ausführungsform ist x gleich 3, 4, 5 oder 6.

Die Komponenten (E) sind übliche für Dispersionenfarben verwendete Hilfsstoffe wie Netzmittel, Dispergiermittel, Entschäumer, Rheologieadditive, Biozide, Fungizide, Algizide, Puffersubstanzen wie Natronlauge, Ammoniaklösung, Amine wie 2-Amino-2-methyl-1-propanol, Säuren wie Schwefelsäure, Salzsäure und Essigsäure.

Als Netz- und Dispergiermittel eignen sich nichtionische Tenside aus der Klasse der Alkylpolyethylenglykolether, Fettsäureethoxylate, Alkylpolyglykoside, Sorbitanesterethoxylate, Alkindiolethoxylate, Ethylenoxid und Propylenoxid-Blockcopolymere und Additionsprodukte von Ethylenoxid und Propylenoxid an Alkohole, Methyl-, Butyl- und Benzyl-endgruppenverschlossene Alkoholethoxylate und Alkylphenolethoxylayte. Weiterhin werden beispielsweise Netz- und Dispergiermittel aus der Klasse der anionischen Tenside aus der Gruppe der Natrium-, Kalium- und Ammoniumsalze von Fettsäuren, Natriumalkylbenzolsulfonate, Natriumalkylsulfonate, Natriumolefinsulfonate, Natriumpolynaphthalinsulfonate, Natriumdialkyldiphenyletherdisulfonate, Natrium-, Kalium- und Ammoniumalkylsulfate, Natrium-, Kalium- und Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und Monoalkylpolyoxethylsulfosuccinate, sowie Alkylpolyethylenglykoletherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze verwendet.

Als Dispergiermittel für anorganische Pigmente und Füllstoffe werden Homo- und Copolymere der Acrylsäure, Methacylsäure, Maleinsäure, Fumarsäure und Acryl- und Methacrylsäureester und deren Natrium-, Kalium- und Ammoniumsalze verwendet.

Als Entschäumer eignen sich Mineralölentschäumer, Siliconentschäumer oder Entschäumer auf Basis von Polyalkylenglykolethern. Entschäumende Komponenten der genannten Entschäumerklassen sind hydrophobe Feststoffteilchen wie hydrophobmodifizierte Silica, Fettsäuresalze zwei- und dreiwertiger Kationen wie Aluminiumstearat und Calciumstearat, Amidwachse wie Ethylenbisstearylamid und Siliconharze.

Übliche Rheologieadditive sind Bentonite, Silica, Celluloseether, hydrophobmodifizerte Urethane und alkalilösliche Acrylatverdicker.

Die erfindungsgemäßen Dispersionsfarben enthalten üblicherweise Konservierungsmittel, um den Befall mit Mikroorganismen zu verhindern. Übliche Konservierungsstoffe sind Formaldehyd und Formaldehyd-abspaltende Verbindungen wie Dihydroxy-2,5-dioxahexan, Chlormethylisothiazolinon, Benzylisothiazolinon, Benzimidazolinon und Bronopol. Zur Verhinderung des Befalls mit Pilzen und Algen, insbesondere nach dem Aufbringen der Dispersionsfarben auf Außenwände, Fassaden, Dachsteine und Metall- und Kunststoffteile wie Regenrinnen im Außenbereich, können den Dispersionsfarben Filmkonservierungsmittel zugesetzt werden. Beispielsweise eignen sich Diuron, Carbendazim, Octylisothiazolinon, Dichloroctylisothiazolinon, Zinkpyrithion, Terbutryn und Irgarol als Filmkonservierungsmittel.

Als Filmbildehilfsmittel kommen Substanzen zum Einsatz, die die Mindestfilmbildetemperatur auf bis unter 5 °C herabsenken wie beispielsweise Testbenzin, Methylpropylenglykol, Methyldipropylenglykol, Methyltripropylenglykol, Butylglykol, Butyldiglykol, Butyldipropylenglykol und Butyltripropylenglykol, Diethyleriglykolbenzoat, Trimethylpentan-1,3-diol monoisobutyrat, Isodecylbenzoat, Isononylbenzoat, Monoethylenglykol und Monopropylenglykolmonooleat und Milchsäureester von Alkoholen mit 6 bis 30 Kohlenstoffatomen.

Als Puffersubstanzen werden für die erfindungsgemäßen Dispersionsfarben Säuren und Alkalien wie Natronlauge, Ammoniaklösung, Amine wie 2-Amino-2-methyl-1-propanol, Triethanolamin, Dimethylaminoethanol und Säuren wie Schwefelsäure, Salzsäure, Essigsäure und Ameisensäure verwendet.

Der erfindungsgemäßen Dispersionsfarbe können gegebenenfalls weitere Komponenten (F) zugesetzt werden. Dispersionsfarben können gegebenenfalls auch anorganische Buntpigmente zugesetzt werden, um mit einer Mischung aus organischen und anorganischen Pigmenten einen gewünschten Farbton einzustellen.

Geeignete anorganische Buntpigmente sind Eisenoxide, Magnetite, Manganeisenoxide, Chromoxide, Ultramarin, Nickel- oder Chromantimontitanoxide, Marigantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer, Zink sowie Mangan, Bismutvanadat sowie Verschnittpigmente. Insbesondere werden die Colour Index Pigmente Pigment Yellow 184, Pigment Yellow 53, Pigment Yellow 42, Pigment Brown 24, Pigment Red 101, Pigment Blue 28, Pigment Blue 36, Pigment Green 50, Pigment Green 17, Pigment Black 11 und Pigment Black 33 verwendet.

Die erfindungsgemäßen Dispersionsfarben können darüber hinaus weitere filmbildende Komponenten entfalten, wie Silikonharze, Kaliwasserglas oder Alkydharzdispersionen.

Die erfindungsgemäßen Dispersionsfarben enthalten vorzugsweise 1 bis 75 Gew.-% (A), insbesondere 5 bis 50 Gew.-% (A), vorzugsweise 1 bis 70 Gew.-% (B), insbesondere 2 bis 50 Gew.-% (B), vorzugsweise 0,1 bis 10 Gew.-% (C), insbesondere 0,2 bis 5 Gew.-% (C), vorzugsweise 0,05 bis 2 Gew.-% (D), insbesondere 0,1 bis 0,5 Gew.-% (D), vorzugsweise 0,01 bis 10 Gew.-% (E), insbesondere 0,1 bis 2 Gew.-% (E) und vorzugsweise 1 bis 70 Gew.-% (F), insbesondere 2 bis 50 Gew.-% (F).

Vorzugsweise enthalten die erfindungsgemäßen Dispersionsfarben Wasser in einer Menge von mindestens 20 Gew.-%, insbesondere 20 bis 80 Gew.-%, speziell ad 100 Gew.-%.

### Beispiele

Die erfindungsgemäßen Dispersionsfarben werden auf übliche Weise hergestellt, indem zunächst die Weißpigmente und Füllstoffe dispergiert werden und anschließend die Polymerdispersion zudosiert wird. Die hergestellte Weißdispersionsfarbe wird anschließend mit einer oder mehreren Pigmentpräparationen auf den gewünschten Farbton abgetönt.

### Herstellen der Weißdispersionsfarben

**Tabelle 1: Formulierung für Weißdispersionsfarben**

| Nr. | Komponente | Zusammensetzung/Eigenschaft | in Gew.-% |
|---|---|---|---|
| 1 | Wasser | | 18,1 |
| 2 | Tylose^{®} MH 10000 YP2 | Celluloseether, Verdicker | 0,2 |
| 3 | Mowiplus^{®} XW 330 | Dispergiermittel für anorganische Pigmente | 0,3 |
| 4 | Netzmittel | Siehe Tabelle 2 | 0,3 |
| 5 | D-Foam-R C 113 | Mineralölentschäumer | 0,2 |
| 6 | Titandioxide Kronos^{®} 2160 | Titandioxid, Weißpigment | 20,0 |
| 7 | Omyacarb^{®} 5 GU | Calciumcarbonat, Füllstoff | 20,0 |
| 8 | Ammoniak-Lösung (25%ig) | Alkalisierung | 0,2 |
| 9 | Mowilith^{®} LDM 7717 (ca. 50%ig) | Acrylatdispersion, Bindemittel | 40,0 |
| 10 | Tafigel^{®} PUR 40 1:9 in Wasser | Urethanverdicker | 0,4 |
| 11 | Nipacide^{®} BIT 10 W | Benzisothiazolinon, Biozid | 0,2 |
| | Summe | | 100 |

Zunächst werden die Komponenten 1 - 5 vorgelegt und anschließend mit einer Dissolverscheibe mit den Komponenten 6 und 7 zu einer Pigmentdispersion bei hohen Rührergeschwindigkeiten dispergiert (Labordissolver mit 3000 U/min). Anschließend werden die Komponenten 8 - 11 unter langsamerem Rühren zugegeben, da die verwendeten Bindemittel schweranfällig sein können (Labordissolver mit 500 U/min).

Als Netzmittel werden folgenden Substanzen verwendet.

**Tabelle 2: Netzmittel der erfindungsgemäßen Dispersionsfarben und Vergleichsbeispiele**

| Beispiel | Netzmittel | Produkt |
|---|---|---|
| 1 (V) | Alkoholethoxylat mit 7 Mol Ethylerioxid | Emulsogen® LCN 070 |
| 2 (V) | Ethylenoxid/Propylenoxid Blockcopolymer mit einer EO-PO-EO Blockstruktur und 10% Ethylenoxid, linear | Genapol^{®} PF 10 |
| 3 (V) | Ethylenoxid/Propylenoxid Blockcopolymer mit einer EO-PO-EO Blockstruktur und 20% Ethylenoxid, linear | Genapol^{®} PF 20 |
| 4 (V) | Ethylenoxid/Propylenoxid Blockcopolymer mit einer EO-PO-EO Blockstruktur und 40% Ethylenoxid, linear | Genapol^{®} PF 40 |
| 5 (V) | Ethylendiamin Ethylenoxid/Propylenoxid Blockcopolymerisat | Genapol^{®} PN 30 |
| 6 (V) | Alkoholalkoxylat mit 8 Mol Ethylenoxid und 4 Mol Propylenoxid | Genapol^{®} EP 2584 |
| 7 (V) | Alkoholethoxylat mit 8 Mol Ethylenoxid, endgruppenverschlossen mit Butylchlorid | Genapol^{®} BE 2410 |
| 8 | Glyzerin + 24 EO + 48 PO | |
| 9 | Butantriol + 24 EO + 48 PO | |
| 10 | Hexantriol + 24 EO + 48 PO | |

Bei den Netzmitteln gemäß Beispiel 8, 9 und 10 handelt es sich um Blockalkoxylate.

### Luftgehalt der Weißdispersionsfarben

Die oberflächenaktiven Substanzen der Weißdispersionsfarben wie Netz- und Dispergiermittel und Emulgatoren der verwendeten Bindemittel können zum Schäumen neigen, was den Herstellprozess behindern und verlängern kann. Aufgrund der relativ hohen Viskosität der Weißdispersionsfarben wird der Schaum in der Dispersionsfarbe eingeschlossen, so dass er nicht mehr entweichen kann. Zur Vermeindung des Schäumaufbaus werden Entschäumer verwendet, deren Konzentration von der Schaumneigung der oberflächenaktiven Verbindungen abhängt. Vorteilhaft ist es daher, wenn die verwendeten Netz- und Dispergiermittel schwachschäumende Substanzen sind oder sogar entschäumend wirken. Von den hergestellten Dispersionsfarben wird daher mit einem Pyknometer der Firma Elcometer Ltd, Manchester die Dichte bestimmt. Je höher die Dichte der Dispersionsfarbe, des so niedriger ist der Lufteinschluss.

### Viskosität der Weißdispersionsfarben

Für das Einstellen der rheologischen Eigenschaften werden den erfindungsgemäßen Dispersionsfarben Rheologieadditive zugesetzt, beispielsweise Celluloseether, Urethanverdicker und Acrylatverdicker. Zwischen den Rheologieadditiven und Netzmitteln kann zu einer Wechselwirkung kommen, insbesondere mit Urethanverdickern, so dass die Viskosität bei Zugabe der Netzmittel gesenkt werden kann. Vorteilhaft ist es daher, wenn die verwendeten Netzmittel die Viskosität der Dispersionsfarbe nicht senken. Die Viskosität der Weißdispersionsfarbe wird nach einem Tag mit einem Brookfield Viskosimeter, Spindel Nr. 4 bei 100 U/min bestimmt. Die Viskosität der Weißdispersionsfarbe soll sich nach Zugabe der Netzmittel nicht signifikant verändern.

### Oberflächenspannung der Weißdispersionsfarben

Als Maß für die Netzwirkung der Weißdispersionsfarben wird die Oberflächenspannung gemessen. Dazu wird die Weißdispersionsfarbe in einem Gewichtsverhältnis von 1:1 mit Wasser verdünnt und die Oberflächenspannung mit einem Lauda Tensiometer bestimmt, dass nach der Platinringmethode nach ASTM D971 arbeitet. Die Wirksamkeit der verwendeten Netzmittel zeigt sich in einer Erniedrigung der Oberflächenspannung. Je niedriger die Oberflächenspannung der verdünnten Weißdispersionsfarben, des so wirksamer ist die Netzwirkung der verwendeten Produkte.

### Abtönen der Dispersionsfarben

Zum Einstellen eines bestimmten Farbtons werden den Weißdispersionsfarben Abtönpasten zugesetzt. Für das Ausprüfen der Farbstärke und Kompatibilität von Abtönpasten werden 200 g abgetönte Dispersionsfarbe bestehend aus 98 Gew.-% Weißdispersionsfarbe und 2 Gew.-% einer Blaupigmentpaste in eine Blechdose geben und 60 Sekunden in einem Inkshaker 500 der Fa. Olbrich Know How, Hemer homogenisiert. Die verwendete Blaupigmentpaste hat folgende Zusammensetzung.

**Tabelle 3: Zusammensetzung der Blaupigmentpaste zum Abtönen der Dispersionsfarben**

| Nr. | Komponente | Zusammensetzung/Eigenschaft | in Gew.-% |
|---|---|---|---|
| 1 | Wasser | | 33,5 |
| 2 | Emulsogen^{®} LCN 118 | Dispergiermittel | 6,0 |
| 3 | D-Foam-R C 741 | Siliconölentschäumer | 0,3 |
| 4 | Nipacide^{®} BIT 10 W | Benzisothiazolinon, Biozid | 0,2 |
| 5 | Polyethylenglykol 300 | Feuchthaltemittel | 10,0 |
| 6 | Hostaperm^{®} Blau B2G | Phthalocyaninpigment, Color Index PB 15:3 | 50,0 |
| | Summe | | 100,0 |

Zur Bestimmung der Farbstärke und der Kompatibilität der Farbpaste in der Weißdispersionsfarbe werden die abgetönten Dispersionsfarben nach einem Tag auf einem Prüfkarton mit einer 120 µm Rakel auf einem Filmziehgerät, Modell 509 MC der Fa. Erichsen GmbH, Hemer ausgestrichen. Nach 7 Minuten wird der Rubout-Test auf dem trocknenden Falbfilm in der in der Schrift US-3840383 beschriebenen Weise durchgeführt. Von dem vollständig getrockneten Film werden nach 24 Stunden die farbmetrischen Werte mit einem Konica - Minolta Spektrophotometer Modell CM 3600 bestimmt.

**Tabelle 4: Eigenschaften der Dispersionsfarben**

| Beispiel | Versuch | Dichte der Farbe | Viskosität | Oberflächenspannung | Relative Farbstärke | Rubout |
|---|---|---|---|---|---|---|
| | | [g/cm³] | [mPa·s] | [mN/m] | [%] | |
| 1 (V) | Emulsogen LCN 070 | 1,3276 | 2133 | 35,6 | 54,7 | Ja |
| 2 (V) | Genapol PF 10 | 1,3542 | 2000 | 36,6 | 100,8 | Nein |
| 3 (V) | Genapol PF 20 | 1,3587 | 1720 | 32,6 | 99,3 | Nein |
| 4 (V) | Genapol PF 40 | 1,3594 | 1780 | 30,6 | 100,9 | Nein |
| 5 (V) | Genapol PN 30 | 1,3635 | 2160 | 29,0 | 100,0 | Nein |
| 6 (V) | Genapol EP 2584 | 1,3515 | 2290 | 36,3 | 86,3 | Nein |
| 7 (V) | Genapol BE 2410 | 1,2870 | 1740 | 30,4 | 54,7 | Ja |
| 8 | Glyzerin + 24 EO + 48 PO | 1,3649 | 2140 | 29,8 | 97,5 | Nein |
| 9 | Butantriol + 24 EO + 48 PO | 1,3391 | 2000 | 29,6 | 97,0 | Nein |
| 10 | Hexantriol + 24 EO + 48 PO | 1,3447 | 2100 | 30,3 | 99,2 | Nein |
| 11 (V) | Ohne Netzmittel | 1,2987 | 1950 | 39,2 | 36,6 | Ja |

Die erfindungsgemäßen Dispersionsfarben der Beispiele 8 bis 10 zeigen zusammen mit dem Beispiel 5 (V) gegenüber dem Stand der Technik die besten Ergebnisse: Das Netzmittel aus Beispiel 1 (V) neigt deutlich zum Schäumen, was in einer niedrigeren Dichte von etwa 1,33 g/ml und einem höheren Lufteinschluss als bei den Netzmitteln der Beispiele 8 bis 10 resultiert. Die Netzmittel der Beispiele 2 (V) und 6 (V) zeigen eine geringere Netzwirkung und eine höhere Oberflächenspannung von etwa 36 mN/m gegenüber den Netzmitteln in Beispiel 8 bis 10. Die Verwendung der Netzmittel der Beispiele 3 (V) und 4 (V) führt zu einer niedrigeren Viskosität der Dispersionsfarben als bei Verwendung der Netzmittel der Beispiele 8 bis 10. Das Netzmittel des Beispiels 5 (V) zeigt vergleichbare Ergebnisse wie die Netzmittel der Beispiele 8 bis 10, weist aber im Gegensatz zu diesen einen ammoniakalischen Geruch und eine dunkle Farbe auf, während die Netzmittel der Beispiele 8 bis 10 frei von ammoniakalischem Geruch sind und eine helle bis klare Farbe zeigen. Die dunkle Farbe des Netzmittels in Beispiel 5 (V) wird durch das Verwenden von Ethylendiamin als Startmolekül für die Alkoxylierung verursacht. Die Netzmittel der Beispiele 8 bis 10 sind dagegen farblos bis gelblich und sind frei von ammoniakalischem Geruch. Das Netzmittel in Beispiel 7 (V) ist gänzlich ungeeignet, weil die Farbstärke ähnlich wie in Beispiel 1 (V) weit hinter den Farbstärken der Beispiele 8 bis 10 zurück bleibt.

## Patentansprüche

1. Verwendung von Verbindungen der Formel (I) 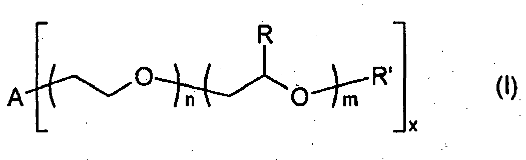 worin
A ein aus einem mehrwertigen Alkohol oder Alkanolamin mit mindestens 3 aktiven Wasserstoffatomen abgeleiteter Rest,
R ein Methyl- oder Ethylrest,
R' ein Wasserstoffatom oder ein Methyl-, Ethyl-, Propyl- oder Butylrest-,
n eine ganze Zahl von 1 bis 250,
m eine ganze Zahl von 1 bis 500,
x kleiner oder gleich der Anzahl der aktiven Wasserstoffatome im mehrwertigen Alkohol oder Alkanolamin ist, von dem A abgeleitet ist,
und worin die Polyoxyethylen- und die Polyoxyalkylengruppen blockweise entsprechend der in der Formel (I) angegebenen Reihenfolge angeordnet sind, als entlüftendes Netz- und Dispergiermittel in Dispersionsfarben, enthaltend Wasser und
(A) mindestens eine Polymerdispersion, welche Homo- oder Copolymere von olefinisch ungesättigten Monomeren umfasst,
(B) mindestens ein anorganisches Weißpigment oder ein anorganischer Füllstoff,
(C) mindestens ein organisches Buntpigment oder Rußpigment.

2. Verwendung nach Anspruch 1, wobei 0,01 bis 10 Gew.-% (E) üblicher, für Dispersionsfarben verwendete Hilfsstoffe ausgewählt aus der Gruppe bestehend aus Netzmitteln, Dispergiermitteln, Entschäumern, Rheologieadditiven, Bioziden, Fungiziden, Algiziden, Filmbildehilfsmittel, Puffersubstanzen wie Natronlauge, Ammoniaklösung, Aminen wie 2-Amino-2-methyl-1-propanol, Säuren wie Schwefelsäure, Salzsäure und Essigsäure zusätzlich enthalten sind.

3. Verwendung nach Anspruch 1 und/oder 2, wobei zusätzlich 1 bis 70 Gew.-% (F) weiterer Zusatzstoffe ausgewählt aus der Gruppe bestehend aus anorganischen Buntpigmenten, Silikonharzen, Kaliwasserglas oder Alkydharzdispersionen enthalten sind.

4. Verwendung nach einem oder mehreren der Ansprüche 1 bis 3, worin die olefinisch ungesättigten Monomere ausgewählt sind aus Vinylmonomeren, arylsubstituierten Olefinen, olefinisch ungesättigten Carbonsäureestern, olefinisch ungesättigten Dicarbonsäureestern, olefinisch ungesättigten Carbonsäuren und Dicarbonsäuren, olefinisch ungesättigten Sulfonsäuren und Phosphonsäuren und Alkali- und Ammoniumsalzen, olefinisch ungesättigten Amine, Ammoniumsalzen, Nitrilen und Arniden, Olefinen oder halogenierten Olefinen mit 2 bis 8 Kohlenstoffatomen.

5. Verwendung nach einemoder mehreren der Ansprüche 1 bis 4, worin A bis zu 8 aktive Wasserstoffatome umfasst.

6. Verwendung nach einem oder mehreren der Ansprüche 1 bis 5, worin x gleich 3, 4, 5 oder 6 ist.

7. Verwendung nach einem oder mehreren der Ansprüche 1 bis 6, worin n eine ganze Zahl von 5 bis 100 ist.

8. Verwendung nach einem oder mehreren der Ansprüche 1 bis 7, worin m eine ganze Zahl von 10 bis 200 ist.

9. Verwendung nach einem oder mehreren der Ansprüche 1 bis 8, wobei 1 bis 75 Gew.-% (A) enthalten sind.

10. Verwendung nach einem oder mehreren der Ansprüche 1 bis 9, wobei 1 bis 70 Gew.-% (B) enthalten sind.

11. Verwendung nach einem oder mehreren der Ansprüche 1 bis 10, wobei 0,1 bis 10 Gew.-% (C) enthalten sind.

12. Verwendung nach einem oder mehreren der Ansprüche 1 bis 11, wobei 0,05 bis 2 Gew.-% (D) enthalten sind.

13. Verwendung nach einem oder mehreren der Ansprüche 1 bis 12, wobei 20 bis 80 Gew.-% Wasser enthalten sind.

## Claims

1. The use of compounds of the formula (I) 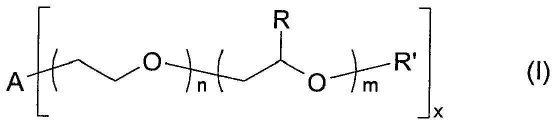 in which
A is a radical derived from a polyfunctional alcohol or alkanolamine having at least 3 active hydrogen atoms,
R is a methyl or ethyl radical,
R' is a hydrogen atom or a methyl, ethyl, propyl, or butyl radical,
n is an integer from 1 to 250,
m is an integer from 1 to 500,
x is less than or equal to the number of active hydrogen atoms in the polyfunctional alcohol or alkanolamine from which A is derived,
and in which the polyoxyethylene and the polyoxyalkylene groups are arranged blockwise in the order indicated in the formula (I), as deaerating wetting agent and dispersant in emulsion paints comprising water and
(A) at least one polymer dispersion which comprises homopolymers or copolymers of olefinically unsaturated monomers,
(B) at least one inorganic white pigment or one inorganic filler,
(C) at least one organic chromatic pigment or carbon black pigment.

2. The use as claimed in claim 1, where 0.01 to 10 wt.% of (E) customary auxiliaries used for emulsion paints and selected from the group consisting of wetting agents, dispersants, defoamers, rheological additives, biocides, fungicides, algicides, film-forming assistants, buffer substances such as aqueous sodium hydroxide solution, ammonia solution, amines such as 2-amino-2-methyl-1-propanol, and acids such as sulfuric acid, hydrochloric acid, and acetic acid, are further comprised.

3. The use as claimed in claim 1 and/or 2, where further 1 to 70 wt.% of (F) further adjuvants selected from the group consisting of inorganic chromatic pigments, silicone resins, potassium silicate, or alkyd resin dispersions are comprised.

4. The use as claimed in one or more of claims 1 to 3, wherein the olefinically unsaturated monomers are selected from vinyl monomers, aryl-substituted olefins, olefinically unsaturated carboxylic esters, olefinically unsaturated dicarboxylic esters, olefinically unsaturated carboxylic acids and dicarboxylic acids, olefinically unsaturated sulfonic acids and phosphonic acids and alkali metal salts and ammonium salts, olefinically unsaturated amines, ammonium salts, nitriles and amides, and olefins or halogenated olefins having 2 to 8 carbon atoms.

5. The use as claimed in one or more of claims 1 to 4, wherein A comprises up to 8 active hydrogen atoms.

6. The use as claimed in one or more of claims 1 to 5, wherein x is 3, 4, 5, or 6.

7. The use as claimed in one or more of claims 1 to 6, wherein n is an integer from 5 to 100.

8. The use as claimed in one or more of claims 1 to 7, wherein m is an integer from 10 to 200.

9. The use as claimed in one or more of claims 1 to 8, where 1 to 75 wt.% of (A) are comprised.

10. The use as claimed in one or more of claims 1 to 9, where 1 to 70 wt.% of (B) are comprised.

11. The use as claimed in one or more of claims 1 to 10, where 0.1 to 10 wt.% of (C) are comprised.

12. The use as claimed in one or more of claims 1 to 11, where 0.05 to 2 wt.% of (D) are comprised.

13. The use as claimed in one or more of claims 1 to 12, where 20 to 80 wt.% of water are comprised.

## Revendications

1. Utilisation de composés de formule (I) 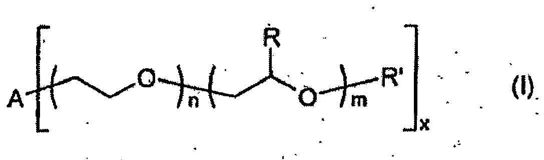 dans laquelle
A représente un radical dérivé d'une alcanolamine ou d'un alcool polyvalent contenant au moins 3 atomes d'hydrogène actifs,
R représente un radical méthyle ou éthyle,
R' représente un atome d'hydrogène ou un radical méthyle, éthyle, propyle ou butyle,
n représente un nombre entier de 1 à 250,
m représente un nombre entier de 1 à 500,
x est inférieur ou égal au nombre d'atomes d'hydrogène actifs dans l'alcanolamine ou l'alcool polyvalent duquel A est dérivé,
et dans laquelle les groupes polyoxyéthylène et polyoxyalkylène sont agencés séquentiellement dans l'ordre indiqué dans la formule (I), en tant qu'agent mouillant et dispersant de désaération dans des peintures en dispersion, contenant de l'eau et
(A) au moine une dispersion de polymères, qui comprend des homo- ou copolymères de monomères oléfiniquement insaturés,
(B) au moins un pigment blanc inorganique ou une charge inorganique,
(C) au moins un pigment coloré organique ou un pigment de noir de carbone.

2. Utilisation selon la revendication 1, dans laquelle 0,01 à 10 % en poids de (E) des adjuvants usuels utilisés pour les peintures en dispersion, choisis dans le groupe constitué par les agents mouillants, les agents de dispersion, les agents antimousse, les additifs rhéologiques, les biocides, les fongicides, les algicides, les adjuvants filmogènes, les substances tampons telles que la soude caustique, la solution ammoniacale, les amines telles que le 2-amino-2-méthyl-1-propanol, les acides tels que l'acide sulfurique, l'acide chlorhydrique et l'acide acétique, sont en outre contenus.

3. Utilisation selon la revendication 1 et/ou 2, dans laquelle 1 à 70 % en poids de (F) d'autres additifs choisis dans le groupe constitué par les pigments colorés inorganiques, les résines de silicone, le verre soluble au potassium ou les dispersions de résines alkydes sont en outre contenus.

4. Utilisation selon une ou plusieurs des revendications 1 à 3, dans laquelle les monomères oléfiniquement insaturés sont choisis parmi les monomères de vinyle, les oléfines à substitution aryle, les esters d'acides carboxyliques oléfiniquement insaturés, les esters d'acides dicarboxyliques oléfiniquement insaturés, les acides carboxyliques et les acides dicarboxyliques oléfiniquement insaturés, les acides sulfoniques et les acides phosphoniques et les sels d'alcalis et d'ammonium oléfiniquement insaturés, les amines, les sels d'ammonium, les nitriles et les amides oléfiniquement insaturés, les oléfines ou les oléfines halogénées de 2 à 8 atomes de carbone.

5. Utilisation selon une ou plusieurs des revendications 1 à 4, dans laquelle A comprend jusqu'à 8 atomes d'hydrogène actifs.

6. Utilisation selon une ou plusieurs des revendications 1 à 5, dans laquelle x représente 3, 4, 5 ou 6.

7. Utilisation selon une ou plusieurs des revendications 1 à 6, dans laquelle n représente un nombre entier de 5 à 100.

8. Utilisation selon une ou plusieurs des revendications 1 à 7, dans laquelle m représente un nombre entier de 10 à 200.

9. Utilisation selon une ou plusieurs des revendications 1 à 8, dans laquelle 1 à 75 % en poids de (A) sont contenus.

10. Utilisation selon une ou plusieurs des revendications 1 à 9, dans laquelle 1 à 70 % en poids de (B) sont contenus.

11. Utilisation selon une ou plusieurs des revendications 1 à 10, dans laquelle 0,1 à 10 % en poids de (C) sont contenus.

12. Utilisation selon une ou plusieurs des revendications 1 à 11, dans laquelle 0,05 à 2 % en poids de (D) sont contenus.

13. Utilisation selon une ou plusieurs des revendications 1 à 12, dans laquelle 20 à 80 % en poids d'eau sont contenus.
